# EUROPEAN PATENT APPLICATION

(11) **EP 2 302 430 A1**
(43) Date of publication of application: **30.03.2011**
(21) Application number: 09012260.7
(22) Date of filing: 28.09.2009
(51) Int. Cl.: G02B 6/38, G02B 6/44

(54) **Device for receiving subassemblies assigned to at least one optical fiber cable and for fastening the same to a mounting**

(71) Applicant: CCS Technology Inc., Wilmington, DE 19803 (US)
(72) Inventor: Sokolowski, Bartlomiej, 97-300 Piotrkow Trybunalski (PL); Ciechomski, Tomasz, 99-400 Lowicz (PL); Gralewski-Sek, Grzegorz, 91-849 Lodz (PL); Przemyslaw, Karolak, 62-812 Jastrzebniki (PL)
(74) Representative: Sturm, Christoph

(57) **Abstract**

The invention relates to a device (20) for receiving at least one subassembly, in particular at least one furcation plug or at least one furcation adaptor, assigned to at least one optical fiber cable and for fastening the or each subassembly received on the device to a mounting, in particular to a wall of a distribution panel or distribution cabinet, via the device (20), with a bar-shaped basic body (21), there being formed on a topside of the basic body a guide element (24) for receiving the at least one subassembly, there being formed on an underside, in the region of mutually opposite ends of the basic body (21), anchoring elements (26, 27), via which the device can be introduced into recesses of the mounting. The guide element (24) can receive at least two subassemblies.

## Description

The present application relates to a device for receiving at least one subassembly, in particular at least one furcation plug or at least one furcation adaptor, assigned to at least one optical fiber cable and for fastening the or each subassembly received on the device to a mounting via the device according to the introducing portion of claim 1.

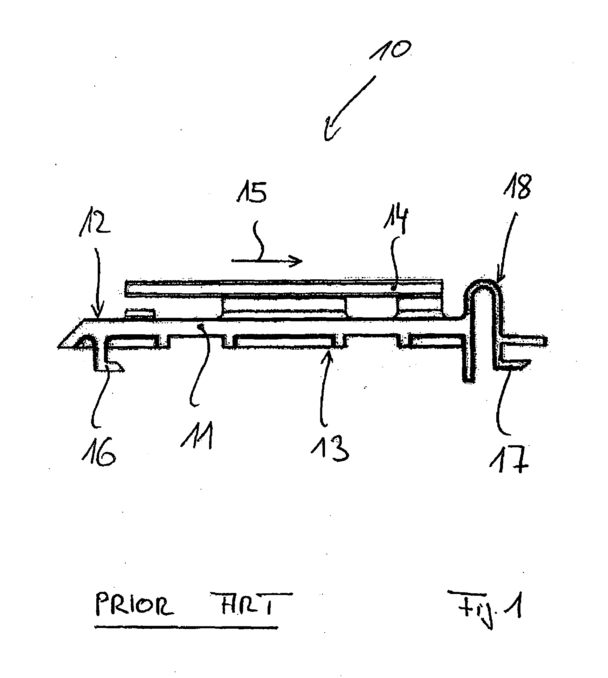

Figure 1 shows a device, known from the prior art, for receiving one subassembly, in particular one furcation plug or one furcation adaptor, assigned to one optical fiber cable and for fastening the subassembly received on the device to a mounting, particularly to a wall of a distribution panel or distribution cabinet via the device. The device 10, shown in a side view in Figure 1, comprises a bar-shaped basic body 11 with a topside 12 and with an underside 13. On the topside 12 of the basic body 11 there is positioned a guide element being designed as guide rail 14, which extends approximately parallel to the bar-shaped basic body 11 and onto which, to receive the subassembly assigned to the optical fiber cable, the respective subassembly can be pushed in such a way that, when the subassembly is pushed onto the guide rail 14, the guide rail 14 engages into a groove formed on the subassembly to be received. The subassembly to be received on the device 10 is pushed onto the guide rail 14 in the direction of the arrow 15. The arrow 15 therefore indicates the direction in which a subassembly to be received by the device 10 and assigned to an optical fiber cable is pushed onto the guide rail 14.

In the region of the underside 13 of the bar-shaped basic body 11 anchoring elements 16 and 17 are formed in the region of mutually opposite ends of the basic body 11.

At the rear end of the basic body 11, as seen in the push-on direction 15, the anchoring element 16 is formed on the underside 13 of the basic body 11. At the front end of the basic body 11, as seen in the push-on direction 15, the anchoring element 17 is formed on the underside 13 of the basic body 11. Via the two anchoring elements 16, 17 the device 10 is able to be introduced into recesses of a mounting, to which the device 10, together with the subassembly received by it and assigned to the optical fiber cable, is to be fastened.

According to Figure 1, the anchoring element 17 positioned at the front end, as seen in the push-on direction 15, of the bar-shaped basic body 11 is designed as an integral part of a stop 18 of U-shaped cross section, this stop 18 being effective in the push-on direction 15 and therefore, in the push-on direction 15, forming a stop for a subassembly to be pushed onto the guide rail 14.

The device 10 as illustrated in Figure 1 is known from US 7,330,629 B2.

Against this background, a novel device is provided allowing to increase the number of subassemblies which can be fastened to a mounting.

A novel device for receiving at least one subassembly assigned to at least one optical fiber cable and for fastening the or each subassembly received on the device to a mounting via the device is defined in claim 1. According to claim 1, the guide element can receive at least two subassemblies in a stacked manner.

A novel fiber optic cable assembly comprising a novel device for receiving at least one subassembly assigned to at least one optical fiber cable is defined in claim 11.

A novel fiber optic shelf assembly comprising at least one novel fiber optic cable assembly is defined in claim 12.

Preferred embodiments of a device for receiving a subassembly assigned to an optical fiber cable and for fastening the subassembly received on the device to a mounting via the device are given in the dependent claims and the description below. Exemplary embodiments will be explained in more detail with reference to the drawing, in which:
- Figure 1: shows a device, known from the prior art, for receiving a subas- sembly assigned to an optical fiber cable and for fastening the subassembly received on the device to a mounting, in a side view;
- Figure 2: shows a novel device for receiving subassemblies assigned to an optical fiber cable and for fastening the or each subassembly received on the device to a mounting, in a first perspective view;
- Figure 3: shows a perspective view of an exemplary fiber optic shelf as- sembly together with devices according to figure 2, said devices according to figure 2 receiving subassemblies assigned to opti- cal fiber cables and being mounted on a mounting surface of the fiber optic shelf assembly.

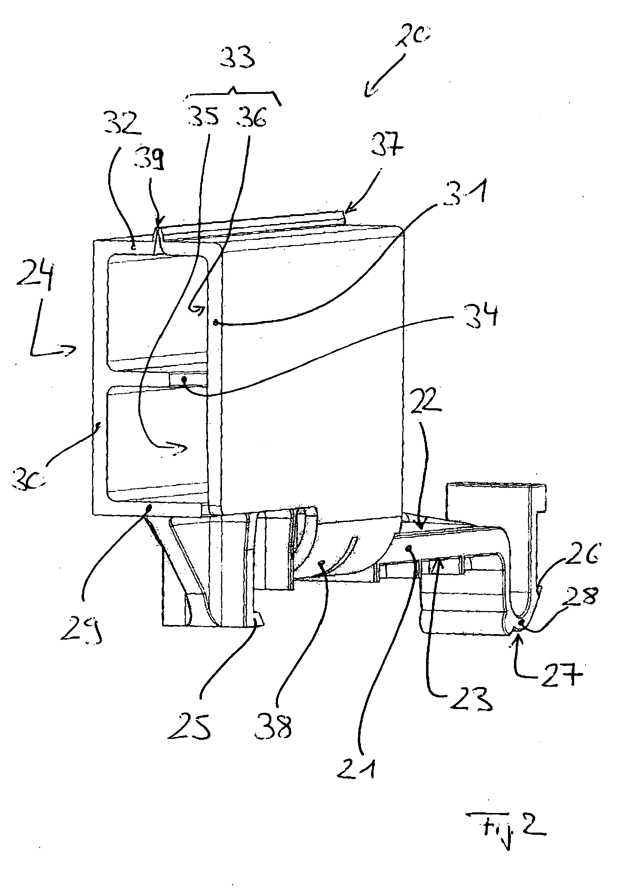

Figure 2 shows of a preferred embodiment of a device 20 according to the present invention for receiving at least one subassembly, such as, for example, at least one furcation plug or at least one furcation adaptor, assigned to at least one optical fiber cable and for fastening the or each subassembly received on the device 20 to a mounting, such as, for example, a mounting surface of a distribution panel or distribution cabinet or fiber optic shelf assembly, via the device.

The device 20 according to Figure 2 has a bar-shaped basic body 21 with a topside 22 and with an underside 23. On the topside 23 of the bar-shaped basic body 21, a guide element 24 is formed which is designed to receive subassemblies, such as furcation plugs or furcation adaptors, assigned to at least one optical fiber cable.

At mutually opposite ends of the bar-shaped basic body 21, anchoring elements 25 and 26 are formed, via which the device 20 can be fastened to a mounting, in particular a wall of a distribution panel or distribution cabinet.

The device 20 can be fastened to a mounting in such a way that the anchoring elements 25, 26 can be introduced in a barb-like manner into recesses of the mountings and thus project into the recesses of the mounting. The anchoring element 26 positioned at the front end of the bar-shaped basic body 23 is formed as part of an element 27 having U-shaped cross section.

The element 27 being U-shaped is designed in such a way that a closed portion 28 of the latter is formed on the underside 23 of the bar-shaped basic body 21 or projects with respect to the underside 23 of the bar-shaped basic body 21. When the device 20 together with the or each subassembly received on the latter and assigned to the optical fiber cable, is to be fastened to a mounting, the element 27 being U-shaped engages with the closed portion 28 into a recess of the mounting.

When a force is exerted on the element 27 the element 27 is subjected to a deformation in a way that the bar-shaped body 21 ultimately arches and the anchoring elements 25, 26 of the latter are clamped in the region of the recesses of the mountings. There is then no risk that the anchoring elements 25, 26 jump out of the recesses of the mountings inadvertently and the device 20 comes loose from the mounting inadvertently.

The guide element 24 of the device 20 comprises a bottom wall 29 formed by said bar-shaped basic body 21, two opposite side walls 30, 31 and a top wall 32. Said walls 29, 30, 31 and 32 of the guide element 24 define an interior 33 of the guide element 24. The interior 33 is open at a front end and a rear end of said guide element 24.

The guide element 24, namely the interior 33 of the same, can receive at least two stacked subassemblies. The guide element 24 comprises at least one middle wall 34 running in parallel to said bottom wall 29 and said top wall 32 dividing said interior 33 into at least two subspaces 35, 36, whereby each subspace 35, 36 can receive one subassembly, especially one furcation plug or one furcation adaptor.

According to the shown embodiment, the interior 33 of the guide element 24 is divided by one middle wall 34 into two subspaces 35, 36, so that according to the shown embodiment two subassemblies can be positioned above each other in a stacked or stapled manner within the interior 33 of the guide element 24.

A hinge 37 is assigned to said top wall 32 of the guide element 24 so that a first side wall 31 of said two side walls 30 and 31 can be rotated around said hinge 37 with respect to a second side wall 30 of said two side walls 30 and 31 and with respect to said bottom wall 29 in order to open and close said guide element 24 for positioning a subassembly within the guide element 24 or for removing a subassembly from the same.

Fig. 2 shows the guide element 24 in closed position. By rotating the first side wall 31 around the hinge 27 the guide element 24 can be opened. When the guide element 24 is opened, the or each subassembly being positioned in the interior 33, namely in the subspaces 35 and 36 of the interior 33, can removed and replaced by another subassembly.

The bottom wall 29 of the guide element 24 is formed on the topside 22 of the basic body 21 as an integral part of the same. The second side wall 30 of the guide element 24 running perpendicular to said bottom wall 29 is non-rotatable with respect to said bottom wall 29.

The hinge 37 being assigned to said top wall 32 is positioned approximately in the middle of said top wall 32.

The hinge 37 divides the top wall 32 into two sections, namely a first section adjacent to the first side wall 31 and a second section adjacent to the second side wall 30, whereby the first section of the top wall 32 can be rotated together with the first side wall 31 around the hinge 37 with respect to a second side wall 30 and the second section of the top wall 32 in order to open and close said guide element 24.

A locking element 38 is assigned to the first side wall 31 of the guide element 24, namely to a lower end of said first side wall 31.

Said locking element 38 engages with said bar-shaped basic body 21 when said guide element 24 is closed. When the guide element 24 is closed the locking element 38 embraces the bar-shaped basic body 21 at the underside 23 of the same. When the device 20 to fastened to a mounting, there is no risk that the guide element 24 is opened because the locking element 38 has no place to open. This provides a security function for the locking element 38. When the device 20 to fastened to a mounting, the locking element 38 can not be opened.

Latches 39 are positioned as part of the hinge 37 above the same. The latches 39 serve as stop members limiting the rotation of the first side wall 31 around the hinge 37 with respect to the second side wall 30.

The basic function of the device 20 is to hold at least two subassemblies, such as at least two furcation plugs or at least two furcation adaptors, assigned to at least one optical fiber cable and the device 20 allows to place them without applying weaving forces into the or each optical fiber cable. The subassemblies being hold in the device 20 can be assigned to the same optical fiber cable or to individual optical fiber cables. The device 20 has a small and compact size, is easy to assemble and has a good durability at the same time. The device 20 can store a larger number of subassemblies, so that capacity on a mounting can be increased.

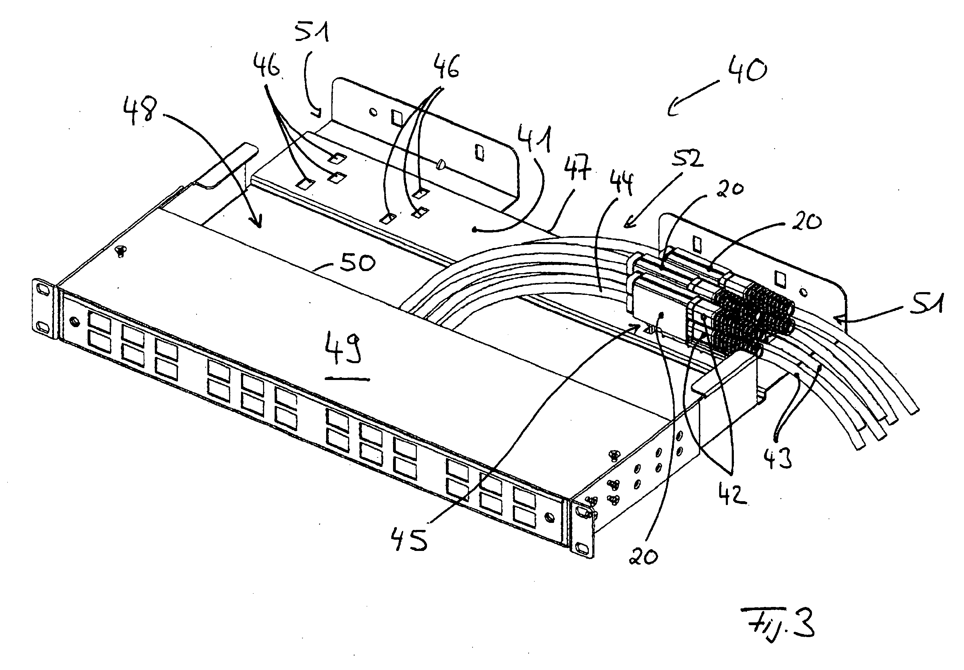

Figure 3 illustrates a front perspective view of explanatory fiber optic equipment in the form of a fiber optic shelf assembly 40 serving as mounting for at least one device 20 according to Figure 2.

According to Figure 3, three devices 20 are mounted to a mounting surface 41 of the fiber optic shelf assembly 40, whereby each of said three shown devices 20 receives two subassemblies 42, in particular two furcation plugs, assigned to optical fiber cables 43.

Each of the devices 20 provides together with the two subassemblies 42 received by the respective device 20, together with the optical fiber cables 43 to which the subassemblies 42 are assigned and together with furcated legs 44 of the optical fiber cables 43 a fiber optic cable assemblies 45.

The furcated legs 44 may be of any shape, including but not limited to round or rectangular. The furcations of the optical fiber cables 43 may be performed by the cable manufacturer in a factory setting before mounting the fiber optic cable assembly 45 to the fiber optic shelf assembly 40.

The mounting surface 41 of the fiber optic shelf assembly 40 comprises a series of pre-defined recesses 46 that are configured to receive the anchoring elements 25 and 26 of the devices 20 for mounting the same to the mounting surface 41. As described above, the anchoring elements 25 and 26 of each device 20 can be introduced in said recesses 46 in a barb-like manner. The recesses 46 are formed in mounting surface 41 by any suitable manner such as stamped, pre-drilled, or the like.

As shown in Figure 3, the fiber optic cable assemblies 45 comprising the devices 20, the subassemblies 42, the optical fiber cables 43 and the furcated legs 44 of the same are attached to a rear portion 47 of the fiber optic shelf assembly 40 in the form of a fiber optic tray 48.

In the example as shown, the fiber optic tray 48 has a 1 U size and supports a fiber optic adapter module 49. Although the fiber optic shelf assembly 40 is depicted as a 1-U any size or configuration is possible such as 4-U or vertical arrangement.

To establish fiber optic connections to the fiber optic adapter module 49, connections are made to one or more fiber optic adapters (not shown) disposed in a rear panel 50 of the fiber optic adapter module 49. In this regard, the optical fiber cables 43 are pulled and routed to the fiber optic tray 48. The fiber optic tray 48 contains openings 51 disposed on each side of the rear portion 47 of the fiber optic tray 48 and an opening 52 in the rear portion 47 to allow the optical fiber cables 43 to be routed into the rear portion 47 of the fiber optic tray 48.

The furcated legs 44 are typically connectorized with fiber optic connectors (not shown) for connecting with said fiber optic adapters (not shoen) in the rear panel 50 of the fiber optic adapter module 49, thereby establishing fiber optic connections.

The fiber optic cable assemblies 45 are secured by the devices 20 to the fiber optic shelf assembly 40; specifically, the fiber optic cable assemblies 45 are secured by the devices 20 to the fiber optic tray 48, and particularly to the rear portion 47. Securing the fiber optic cable assemblies 45 to the fiber optic tray 48 prevents or reduces the chance of bending or damage to the optical fiber cables 43 and the optical fibers therein due to forces applied to the fiber optic cable assemblies 45.

### List of reference signs

- 10: device
- 11: basic body
- 12: topside
- 13: underside
- 14: guide rail
- 15: push-on direction
- 16: anchoring element
- 17: anchoring element
- 18: stop

- 20: device
- 21: basic body
- 22: topside
- 23: underside
- 24: guide rail
- 25: anchoring element
- 26: anchoring element
- 27: element
- 28: portion
- 29: bottom wall
- 30: side wall
- 31: side wall
- 32: top wall
- 33: interior
- 34: middle wall
- 35: subspace
- 36: subspace
- 37: hinge
- 38: locking element
- 39: latch
- 40: fiber optic shelf assembly
- 41: mounting surface
- 42: subassembly
- 43: optical fiber cable
- 44: furcated leg
- 45: fiber optic cable assembly
- 46: recess
- 47: rear portion
- 48: fiber optic tray
- 49: fiber optic adapter module
- 50: rear panel
- 51: opening
- 52: opening

## Claims

1. Device for receiving at least one subassembly, in particular at least one furcation plug or at least one furcation adaptor, assigned to at least one optical fiber cable and for fastening the or each subassembly received on the device to a mounting, in particular to a wall of a distribution panel or distribution cabinet, via the device, with a bar-shaped basic body (21), there being formed on a topside of the basic body a guide element (24) for receiving the at least one subassembly, there being formed on an underside, in the region of mutually opposite ends of the basic body (21), anchoring elements (26, 27), via which the device can be introduced into recesses of the mounting, **characterized in that** the guide element (24) can receive at least two subassemblies.

2. Device according to claim 1, **characterized in that** the guide element (24) comprises a bottom wall (29), two opposite side walls (30, 31) and a top wall (32), said walls defining an interior (33) of said guide element (24) for receiving said at least two subassemblies, and said interior (33) being open at a front end and a rear end of said guide element (24).

3. Device according to claim 2, **characterized in that** the guide element (24) comprises at least one middle wall (34) running in parallel to said bottom wall (29) and said top wall (32) dividing said interior (33) into at least two subspaces (35, 36), whereby each subspace can receive one subassembly.

4. Device according to claim 2 or 3, **characterized in that** a hinge (37) is assigned to said top wall (32) of the guide element (24) so that a first side wall (31) of said two side walls (30, 31) can be rotated around said hinge (37) with respect to a second side wall (30) of said two side walls (30, 31) and with respect to said bottom wall (29) in order to open and close said guide element (24) for positioning a subassembly within the guide element (24) or for removing a subassembly from the same.

5. Device according to claim 4, **characterized in that** said hinge (37) is positioned approximately in the middle of said top wall (32).

6. Device according to claim 4 or 5, **characterized in that** latches (39) are positioned as part of the hinge (37) above the same, whereby the latches (39) serve as stop members limiting the rotation of the first side wall (31) around the hinge (37) with respect to the second side wall (30).

7. Device according to claim 4, 5 or 6, **characterized in that** said first side wall (31) which can be rotated around said hinge (37) comprises at a lower end a locking element (38).

8. Device according to claim 7, **characterized in that** said locking element (38) embraces the bar-shaped basic body (21) at the underside (23) of the same when said guide element (24) is closed.

9. Device according to any of claims claim 4 to 8, **characterized in that** said bottom wall (29) of the guide element (24) is formed on the topside (22) of the basic body (21) as an integral part of the same, and that said second side wall (30) of the guide element (24) running perpendicular to said bottom wall (29) is non-rotatable with respect to said bottom wall.

10. Device according to any of claims claim 1 to 9, **characterized in that** the anchoring element (26), which is assigned to an end of the basic body (21), is an integral part of an element (27) being U-shaped, whereby the element (27) is designed in such a way that a closed portion (28) of the U-shaped element (27) on the underside (23) of the basic body (21) projects with respect to the latter, in such a way that, when the subassembly received by the device is fastened to the mounting, said closed portion (28) can be introduced into a recess of the mounting.

11. Fiber optic cable assembly, comprising a decive (20) according to any of claims claim 1 to 10, at least two subassemblies (42), in particular at least two furcation plugs or at least two furcation adaptors, received by said device (20), and at least one optical fiber cable (43) to which subassemblies (42) are assigned.

12. Fiber optic shelf assembly, comprising a mounting surface (41) to which at least one fiber optic cable assembly (45) according to claim 11 is mounted though a decive (20) according to any of claims claim 1 to 10.
